# EUROPEAN PATENT SPECIFICATION

(11) **EP 0 777 424 B1**
(45) Date of publication and mention of the grant of the patent: **05.08.1998**
(21) Application number: 93920810.4
(22) Date of filing: 23.09.1993
(51) Int. Cl.: A23L 1/236, A23D 7/00, A23L 1/035, A23L 1/307, A23L 1/39, A23L 1/19

(54) **SPREADS**
BROTAUFSTRICHE
PRODUITS A TARTINER

(30) Priority: 28.09.1992 US 952452
(43) Date of publication of application: 11.06.1997
(73) Proprietor: UNILEVER PLC, London EC4P 4BQ (GB); UNILEVER N.V., 3013 AL Rotterdam (NL)
(72) Inventor: BRILHART, Keith Daniel, Baltimore, MD 21229 (US); WESDORP, Leendert Hendrik, Ellicott City, MD 21042 (US)
(74) Representative: Boerma, Caroline
(86) International application number: EP9302587
(87) International publication number: WO9407377

(56) References cited:
- EP-A- 0 547 647
- WO-A-92/09209
- WO-A-93/09682

## Description

### Field of the invention

The present invention relates to the use of mesomorphic phases of edible surfactants, particularly in spreads.

### Background and summary of the invention

According to the general prior art the structuring of foodstuffs can be accomplished in various ways. Two main routes can be distinguished:
(1) the structuring by biopolymers such as proteins and carbohydrates, and
(2) the structuring by "particles" in the widest sense.

In the former case polymeric molecules cross-link to form a tangled, interconnected molecular network in water. In those systems the presence of junction zones or entanglements leads to gel formation and the enclosure of water. Examples of those polymeric substances are starch in puddings, gelatin in desserts and in the water phase of fat spreads, pectin in jams, carrageenin in desserts and in the water phase of fat spreads, and many others.

In the second case entities such as air cells, water droplets, fat droplets, crystals, starch granules or casein micelles are dispersed into the food system. Interaction forces between such particles determine the consistency and the physical stability of the food products. Many food systems fall into this category. In yoghurt aggregated protein particles form a network of protein strands. In mayonnaise an "interconnected" structure of oil droplets is responsible for its consistency. In a shortening fat crystals form an interconnected network structure enclosing oil. In a margarine water droplets are dispersed into a continuous network structure of fat crystals and oil. So, this represents a dispersion of particles in a network of particles. Even more complicated structures are found in butter and ice cream. But in all those cases a build-up of structure from particles of particle networks can be distinguished, which is responsible for the consistency of the finished products.

Heertje et al. WO 92/09209 published June 11, 1992 discloses finished foodstuffs containing mesomorphic phase of edible surfactants as a structuring agent or fat replacer. The formation of mesomorphic phases of edible surfactant molecules and water can give rise to a firm texture and consistency. The use of this property of mesomorphic phases, to give consistency to products, is new to the food business. However, it should be noted that this use may already be known in other areas such as cosmetics and pharmaceuticals.

This new way of product structuring may be described e.g. as a regular, molecular arrangement of surfactant molecules with intervening aqueous regions. For the purpose of the invention the term mesomorphic phase is intended to include all semi-ordered phases of water and edible surfactant materials. Examples of mesomorphic phases are cubic, hexagonal, alpha crystalline gel, beta-crystalline coagel and lamellar phases. Preferred mesomorphic phases for use in accordance with the invention are lyotropic phases; also preferred are lamellar phases. For the purpose of the present invention, the term lamellar phase refers to system having a pattern of alternating bilayers of edible surfactants and water. Examples of lamellar phases are lamellar droplet phases, lamellar gel phases and lamellar phases containing extended parallel layers of surfactants and water.

In the lamellar phase surfactants are believed to form a bilayer structure. It is believed that a bulk lamellar phase consists of stacks of bi-layer structures with an intervening aqueous phase. Products according to the present invention preferably comprise bulk regions of the lamellar phase whereas it has been suggested that known products of the prior art might contain boundary layers of this phase at interfaces, such as those found around oil-droplets in water-continuous fatty products.

The bulk lamellar phase may be formed by temperature cycling of a mixture of surfactant and water. In the crystalline state, the surfactant molecules are oriented with adjacent hydrophillic groups and the hydrophobic chains are parallel and densely packed. On contact with water and heating to the so-called "Krafft" temperature it is believed that water penetrates between the adjacent "head" groups to form a "liquid crystal" structure. On cooling below the "Krafft" temperature, the hydrophobic chains pack into a regular lattice, producing a one-dimensionally periodic "sandwich" structure of alternating surfactant and aqueous layers.

As an example of the "gel" structure obtained: for a mixture of water and a distilled monoglyceride made from fully hydrogenated lard, which has been cycled above the Krafft temperature, X-ray diffraction in the low-angle region reveals that the thickness of the monoglyceride layers is of the order of 50-60 Angstrom. As the proportion of water in the mixture in the system is increased the inter-planar spacing increases, as water is taken up between the monoglyceride layers. It will be realised that the fine structure of the mesomorphic phase, especially as regards the inter-planar spacing, will vary when different surfactants are used.

Another preferred mesomorphic phase according to the invention is a beta-crystalline coagel, which is believed to consist of small plate-like crystals having an average thickness of less than 1 fm or even less than 0.1 fm, said platelets being dispersed in an aqueous environment. This is a suspension of beta-crystalline emulsifier in water and is also known as a "hydrate". These coagels may be formed instead of an alpha crystalline gel phase under certain conditions, such as at acid pH. Both the above mentioned alpha gels and these hydrates are used extensively in the baking industry as crumb softening agents in wheat bread and as cake volume improvers, but it is believed that the structure of the mesomorphic phase is lost during product preparation and consequently that the finished foodstuff (be it bread or cake) does not contain bulk mesomorphic phase. In the context of the invention the coagel phase is considered a semi-ordered phase of water and edible surfactant (mesomorphic phase).

The presence of mesomorphic phases in food products may be detected by any method suitable for the detection of regular arrangements of surfactant materials. Suitable methods include for example NMR, Electron microscopy, Differential scanning calorimetry, light microscopy and X-ray diffraction.

The use of mesomorphic phases of edible surfactants as structuring agent can lead to many useful applications, such as the use as fat replacer, foaming agent, egg white replacer, preservative, lubricating agent, consistency control agent, moisture retention agent and/or flavour release agent in foodstuff. A finished foodstuff may contain a mesomorphic phase of edible surfactant and less than 80% by weight of edible oil.

The present invention relates to the use of mesomorphic phases of edible surfactants as structuring agents in finished food products for example edible emulsions. A problem with finished food products for example edible emulsions such as bread spreads containing mesomorphic phases of edible surfactants is that they often have an undesired off-taste. This off-taste is especially apparent if the edible surfactants in the mesomorphic phase comprise monoglyceride.

Surprisingly it has now been found that the off-taste of spreads containing mesomorphic phases of edible surfactant can markedly be improved if a low level of lactose and/or a non-sugar sweetening agent is added and the amount of dairy ingredients (other than lactose) is kept very low to substantially absent.

Accordingly, the invention relates to a finished foodstuff having a mesomorphic phase of edible surfactant, less than 80 wt% edible oil and a sweetening agent, wherein the sweetening agent comprises lactose and/or a non-sugar sweetening agent at a level providing a sweetness comparable to 0.1 to 5 wt% of lactose with the proviso that the composition contains less than 1%, preferably 0%, of dairy ingredients (other than lactose).

As sweetening agents can be used lactose or artificial (non-sugar) sweeteners like sorbitol and aspartame. The level of sweetening agents is preferably low, e.g. for lactose 0.1 to 5 wt%, more preferred 0.5 to 2 wt% and most preferred 0.7 to 1.2 wt%. The levels of artificial sweeteners is comparable to a 0.1 to 5 wt% lactose level in the product, more preferably 0.5 to 2 wt%, most preferred 0.7 to 1.2 wt%.

The preferred sweetening agent is lactose. If lactose is used it is preferably combined with the substantial removal of dairy ingredients other than lactose, which ingredients tend to buffer the composition. With this combination an even better tasting, less acidic spread can be achieved. A similar advantage can be obtained when using non-sugar sweetening agents, which tend to buffer the composition. For the purpose of the invention it is believed to be well within the ability of the skilled person to select and remove those dairy ingredients, which tend to have a buffering effect. Such dairy ingredients may for example be proteins and salts such as phosphates.

The sweetening agents may be added as such. Also, however, it is possible to add them as part of another ingredient, for example a oligosaccharide is added which contains sweetening ingredients.

The taste improvement of finished food products containing mesomorphic phases of edible surfactants by adding sweetening agents is surprising since generally one would expect that the sweetening agents would provide an undesired sweet taste to the product.

Preferably, the invention is applied to non-sweet finished food products e.g. of the emulsion type such as creams, sauces, toppings, fillings and (margarine type) spreads.

Among spreads, the invention is of particular utility for spreads which are flavored so as to imitate butter (e.g., as opposed to say chocolate flavored spreads) since spreads suitable as butter substitutes generally do not include large amounts of sugar.

With respect to the use as fat replacer the present invention can provide edible compositions which have a reduced calorific contents as compared to normal foodstuffs. The present invention allows for the possibility of preparing foodstuffs with fat-like properties, but with the use according to the present invention containing essentially no fat at all or a very low amount of e.g. less than 5 wt.%.

In recent years there have been several developments regarding so-called "fat replacers". Such materials are intended to have as far as practical the functional and sensorial properties of fats, but to have a reduced calorie content and, where possible, health benefits as compared to fats. Much effort has been spent in the development of new materials which have a fatty functionality but are poorly adsorbed or non-digestible in the human gut.

Amongst such "fat replacer" materials are the sugar fatty acid esters, originally used as lubricants but now proposed for use in foods. The use of these sugar fatty acid esters as fat substitutes in margarines is suggested in EP-A-020 421 (Orphanos et al.: to the Procter & Gamble Company). Such margarines have a "fatty" phase which one or more triglyceride fats and one or more fat-replacers mixed intimately or in mutual solution. Food products are also envisaged which contain no triglyceride but have a "fat" phase consisting essentially of one or more fat replacers. Further reference to edible fat replacers can be found in US-A-4,005,195 and 4,005,196 and EP-A-0,223,856, 0,236,288 and 0,235,836.

Other glyceride related lubricants, especially the so-called hindered polyols having no hydrogen at the beta-carbon, such as the pentaerythritols and related compounds have been proposed as fat replacers (see e.g. US-A-4,927,659 to Nabisco Brands Inc.)

Fat replacers comprising proteinaceous materials have been described. However, it should be understood that because these materials are digestible, they do not have as marked a calorie reducing effect as the above mentioned fat replacers.

Few of these materials, such as the sucrose esters or hindered polyols have completely understood physiological effects. It is generally believed that further experimental work will be required before the physiological effects are fully determined. There remains a clear need for fat replacers which comprise materials of well-understood physiological effect.

It has been found that the mesomorphic phase of edible surfactants can be used as a fat-replacing food component with a fat-like functionality and a simple composition. The invention provides products having a fatty oral impression, a plastic rheology and an improved taste.

Their use as foaming agent stems from the capability of the mesomorphic phase to stabilize air cells. It leads to very stable foam structure with air cells surrounded by a continuous structure of mesomorphic phase. This allows for its use in all products where air stabilization is essential, such as low fat substitutes for whipped creams, ice-cream and creaming margarines.

Their use as egg white replacer results from the excellent foaming capability mentioned above. This allows for its use in all products where raw egg white is used for foaming, such as bavarois type of products and toppings. This is very important in view of the danger of salmonella infection of raw egg white.

Their use as preservative is ascribed to the enhanced microbial stability, caused by the limited size of the intervening water areas in mesomorphic phase systems, which hinders the outgrowth of microorganisms. For example, the size(spacing) of the intervening water layers in a mesomorphic phase which is a lamellar phase system containing 95% water is approximately 0.1 µm, which is far below the size (1fm approx.) of the effective microorganisms.

Their use as lubricant is connected with the fatty functionality and the proper rheology of these materials, even at a high water content. Two aspects are considered to be important in this respect: the hydrophobicity of the aliphatic chains of the applied surfactant molecules and the induced flow properties, e.g. in case of the mesomorphic lamellar phase structure the bilayers of surfactant molecules are separated by layers of water and are thus free to slide in relation to each other with the water as the gliding plane.

Their use as consistency control agent is directly connected with the structuring capability. The desired rheological properties can be achieved by proper choice of experimental parameters, such as concentration of nonionic and ionic surfactant, shear, pH and electrolyte. An example of such an application is in the design of spoonable and pourable products.

Their use as moisture retention agent is connected with the enclosure of the water between aggregated surfactant molecules. The physical state of water in foods influence the physical, chemical and functional characteristics of foods and food components, by influencing the water transport and/or the water mobility and/or the water activity. Their use in foodstuffs allows the introduction of large amounts of "immobilized" water, which can be freed at a later stage.

Their use as flavour release agent is connected with the possibility to entrap flavours in the water phase c.q. the surfactant phase of the mesomorphic phase. The nature of the systems would lead to a controlled release of the applied flavours. Many controlled release delivery systems have been described in the literature, e.g. the use of liposomes. Those systems have to be prepared separately and have to be added to the foodstuff as an extra and only in a limited amount. The use in foodstuffs allows the addition of flavour to the food system as such with proper retention of flavour components.

The mesomorphic phase and its method of preparation is known to food scientists. In the "Lipid Handbook" of Gunstone, Harwood and Padley (Chapman and Hall, 1986) such phases are mentioned at page 227. Further detail may be found in "Food emulsions" of S. Friberg (Marcel Decker, 1976 at page 82).

Such mesomorphic phases may advantageously be formed by heating a mixture containing the edible surfactant and water to a temperature above the Krafft temperature, followed by cooling.

It should be noted further that the above mentioned Lipid Handbook mentions at page 227 the use of mesomorphic phases of saturated, distilled monoglycerides as additives for processed potatoes or cake emulsions. However, this application is used for aerating bakery batters and enhanced complexing with amylose in non-finished starch based products. In the former application the aerating effect is ascribed to the better distribution of the monoglycerides in the batter system and in the latter application the monoglycerides form insoluble complexes with amylose, responsible for the crumb softening effect in bread and the texture improving effects on potato products and pasta foods. The emulsifiers are added to the bakery products before baking and to the potato products before final processing and consequently there is no mesomorphic phase in the finished products. The use of mesomorphic phases in such preparation methods for cake batters and processed potatoes are not embraced within the scope of the present invention.

In a preferred embodiment of the invention the mesomorphic phase is a lamellar gel phase. These phases are particularly preferred, because they can include a sensational amount of water, e.g. 98 or even 99 wt.%, based on the mesomorphic phase of edible surfactant and water.

Another preferred element of the present invention is the presence of bulk regions of mesomorphic phases in food products. Most preferred is the presence of bulk regions of mesomorphic lamellar phases. Bulk phases preferably consist of either a more or less continuous mesomorphic phase or of discrete particles of mesomorphic phase, for example having a number average particle size of between 1 µm and 1,000 µm. In this respect it should be noted that it has been suggested that known products of the prior art might contain non-bulk boundary layers of the lamellar phase at o/w interfaces, such as those found around oil droplets in water-continuous fatty products. The bulk regions of mesomorphic phase of edible surfactants may advantageously be used for replacing the aqueous phase and/or oil phase in food products in accordance to the invention.

Preferably food products in accordance with the invention contain at least 5% by volume of mesomorphic phase of edible surfactant, more preferred 10-100% by volume, for example 20-80% by volume, whereby the volume of the mesomorphic phase refers to the volume of the combined water/edible surfactant system.

### Detailed description of the invention

According to the present invention any edible surfactant may be used although lipidic substances are preferred. However, the use of other, non lipidic surfactants, for example surfactant or amphiphylic carbohydrates is not excluded. In general the preferred edible surfactants are selected from the group consisting of nonionic surfactants, anionic surfactants and cationic surfactants.

Preferred non-ionic surfactants are edible monoglycerides, diglycerides, poly-glycerol esters, nonionic phospholipids, non-fatty carboxylic acid esters of fatty acid esters, partial sugar-fatty acid esters and, partial fatty acid esters of polyols and mixtures thereof.

Preferred cationic surfactants are cationic phospholipids, cationic non-fatty carboxylic acid esters of fatty acid esters and mixtures thereof.

Preferred anionic surfactants are lactylated fatty acid salts, anionic phospholipids, anionic non-fatty carboxylic acid esters of fatty acid esters and their metal salts, fatty acids and their metal salts and mixtures thereof.

The fatty acid chains used in these surfactants can be of any type and origin. Preferably, however C8-28 fatty acid chains are present, more preferred C12-22, for example C14-18. The fatty acids may for example be saturated, unsaturated, fractionated or hydrogenated and be derived from natural (for example dairy, vegetable or animal) source or synthetic sources.

While foodstuffs according to the present invention can comprise a mesomorphic phase comprising 99-5 wt.% of water, it is preferred that the mesomorphic phase comprises 98-60 wt.% and in particular 97-80 wt.% of water, the percentages being based on the total weight of the mesomorphic phase. The total water level of products of the invention may for example be up to 99%, for example 10-90%, conveniently 20-80%.

Preferably the total level of edible surfactants in food products of the invention is from 0.1 to 30%, more preferred 1-15%, most preferred 2-10% by weight of the foodstuff.

Typical embodiments of the invention as illustrated hereafter by example comprise as the mesomorphic phase, in particular the bulk mesomorphic phase a combination of a major amount of a non-ionic surfactant and a minor amount of an ionic co-surfactant. Preferably, the mesomorphic phase comprises 1-30%, more preferred 2-10 wt.% of nonionic surfactant for example monoglycerides and 0.005-10% more preferred 0.01-1 wt.% of ionic co-surfactant for example an alkali metal salt of a lactylated fatty acid, preferably sodium stearoyl lactylate the percentages being based on the total weight of the mesomorphic phase.

The presence of "non-ionic", "cationic" and "anionic" surfactants is of course dependent on the pH-value of the foodstuff in which the surfactants are used. In this respect it should be noted that normally the pH for foodstuffs is between 3-8, for dairy products the pH-value is in the range of 4-7.

The combination of non-ionic and ionic surfactants is preferred because the ionic surfactants are believed to give rise to an electrical charge at the interface of the mesomorphic structure used according to the present invention. The mutual repulsion at the interface of surfactant and water in the mesomorphic phase, for example the lipid bi-layers in a mesomorphic lamellar structure, creates a layer structure in which a surprisingly large amount of water can be incorporated. This phenomenon allow for the use as edible fat replacer and water retention agent as attractive applications.

Preferably the nonionic surfactant and the ionic surfactant are used in weight ratios of from 100 : 1 to 1 :10, more preferred 50 : 1 to 1 : 1, for example 40 : 1 to 10 : 1.

Preferred non-ionic surfactants are monoglycerides, lactylated esters of monoglycerides and phospholipids. Preferred ionic co-surfactants are alkali-metal salts of lactylated fatty acids, e.g. sodium stearoyl lactylate (SSL), citric acid esters, ionic phospholipids (phosphatidic acid (PA), succinated esters and diacetyl tartaric acid ester of monoglyceride (DATEM).

Especially in the presence of the alkali metal salt of a lactylated fatty acid, a monoglyceride-based mesomorphic system can take up a large quantity of water into the inter-planar water layers, and this 'swelling' of the emulsion improves suitability of the products as edible fat replacers. While the invention will be illustrated hereafter by reference to examples in which the surfactant system comprises both monoglyceride and SSL, the use of other, single surfactants or preferably combinations of two or more surfactants to obtain a swellable mesomorphic system is not hereby excluded.

While foodstuffs according to the invention generally will comprise less than 80% by weight of fat, the preferred level of this ingredient is 0-79 wt.% fat, for example 0 to 40%, preferably 1-30%. In some products a low fat content may be required as a flavour carrier.

Surprisingly it has also been found that the mesomorphic phase, which is used according to the invention, can be used in foodstuffs containing electrolyte, without affecting the structuring capability of the system. One example of electrolytes that may be incorporated is sodium chloride. The amount of electrolytes such as salt in foodstuffs according to the invention preferably ranges from about 0.01 - 5 wt.%, more preferred 0.1 to 3%, for example 0.2 to 2% based on the total weight of the finished food product.

The mesomorphic phases of edible surfactants, which are used according to the present invention, can be used in foodstuffs containing a bio-polymer such as carbohydrates e.g. pectins, rice starch, other starches and carrageenan, or proteins. Suitable materials are for example milk protein, gelatin, soy protein, xanthan gum, locust bean gum, agar, hydrolysed starches (for example PaselliSA2 and N-oil), microcrystalline cellulose. Especially preferred is the use of these biopolymer materials in spreads according to the invention. However, as explained below, the amount of dairy protein available to buffer the composition is preferably limited.

The amount of biopolymer in compositions of the invention is dependant on the desired degree of gelling and the presence of other ingredients in the composition. Usually the amount of gelling agent lies between 0 and 30%, mostly between 0.1 and 25% based on the weight of the aqueous phase of the product. If hydrolysed starches are present their level is preferably from 5-20%; other gelling agents are generally used at levels of up to 10%, mostly 1-7%, most preferred 2-5% all percentages being based on the weight of the aqueous phase. Particularly preferred are combination of say 5-15% hydrolysed starch and 0.5-5% of other gelling materials. Preferably the other gelling material includes gelatin.

It is preferable that fat and mesophase containing foodstuffs should comprise less than 10% saturated fat or equivalent thereof on product and/or less than 10% trans fat or equivalent thereof on product. Embodiments of the invention include sunflower oil based spreads which containg no added "hardstock" components. These "hardstock" components include saturated fats and trans fats of which the overall dietary intake should be reduced.

Examples of edible emulsions in which the present invention including mesomorphic phases of edible surfactants may be used, are spreads, in particular zero- or extremely low fat spreads (which contain less than about 20 % of fat), toppings, pastry margarines, and sauces.

For preparing food-products containing the mesomorphic phase in accordance with the invention, it is possible to prepare the mesomorphic phase separately and add this phase an ingredient to the other ingredients of the product, or it is possible to prepare the mesomorphic phase "in-situ" in the presence of one or more other ingredients of the composition. In any case, however, the preparation of the mesomorphic phase preferably takes place while heating to a temperature above the Krafft temperature, followed by cooling. Generally these temperatures are from 0-100°C, more general 30-90°C, most general 40-70°C. Any heat-sensitive ingredients or ingredients which could prevent the formation of a mesomorphic phase are preferably added after cooling.

The invention will be further illustrated by means of a number of specific embodiments: it will be evident that the scope of the invention is not limited to these specific embodiments.

### Spreads

A preferred embodiment of the invention is the use of mesomorphic phases of edible surfactants, as generally specified in the above, in spreads. Suitable uses are as structuring agent, fat replacer, egg replacer, preservative, lubricating agent, consistency control agent, moisture retention agent and flavour release agent. Especially preferred is their use in spreads as a fat replacer, flavour release agent, consistency control agent or preservative.

Spreads according to the embodiment generally contain from less than 80% by weight of edible triglyceride materials. Suitable edible triglyceride materials are for example disclosed in Bailey's Industrial Oil and Fat Products, 1979. In spreads of non-reduced fat content (margarines), the level of triglyceride material will generally be more than 60% and less than 80%, preferably from 70 to 79% by weight. In spreads of reduced fat content the level of triglycerides will generally be from 30-60 %, more general from 35 to 45% by weight. In very low fat spreads the level of triglycerides will generally be from 0-40%, for example 39%, 25%, 20% or even 10% or about 0%. Other fatty materials, for example sucrose fatty acid polyesters may be used as a replacement for part or all of the triglyceride material.

The edible surfactant material for use in spreads is preferably used at a level from 0.1 to 15%, more preferred from 1-10%, most preferred from 2 to 8% by weight. Preferably the level of nonionic edible surfactant is from 0.1 to 15%, more preferred 1 to 10%, most preferred 2 to 8% by weight. Especially preferred are monoglycerides and lecithins as nonionic edible surfactants. Preferably the level of nonionic edible surfactant is from 0 to 5%, more preferred 0.05 to 2%, most preferred 0.1 to 0.5%. Preferred ionic edible surfactants are lactylated fatty acid salts and phosphatidic acid.

Monoglycerides for use in spreads are preferably freshly made so as to have a good taste.

The spreads according to the invention preferably include lactose at 0.1 to 5 wt%, more preferred 0.5 to 2 wt% and most preferred 0.7 to 1.2 wt%. The levels of artificial sweeteners which can also be used is comparable to a 0.1 to 5 wt% lactose level in the product, more preferably 0.5 to 2 wt%, most preferred 0.7 to 1.2 wt% in the product.

If lactose is used as a sweetening agent the composition lacks substantial amounts of dairy ingredients other than lactose. If non-sugar sweetening agents are used the compositions are preferably free from dairy ingredients which tend to buffer the composition. Therefore the finished foodstuffs according to the present invention include less than 1%, especially less than 0.5%, more preferably less than 0.1% and most preferably 0% by weight of dairy ingredients (other than lactose if lactose is present). Dairy ingredients include proteins and salts such as phosphates, which are capable of buffering the composition. Such buffering tends to increase the requirements for addition of acid to reach a pH for microbiological stability. Dairy ingredients which should be limited include whole milk, skim milk, buttermilk, partially defatted milk, filled milk, casein, alkali metal caseinates, whey proteins, nonfat milk solids, milk salts and the like. Some buffering as in the form of gelatin proteins can be tolerated. In order to minimize the inclusion of milk and other proteins available to buffer the compositions, it is best to add lactose as lactose rather than as milk solids.

In addition to the above mentioned ingredients, spreads in accordance with the invention may optionally contain further ingredients suitable for use in spreads. Examples of these materials are gelling agents, additional sugar or other sweetener materials, EDTA, spices, salt, bulking agents, flavouring materials, colouring materials, proteins (subject to the qualifications given above), acids etc. Biopolymers are often useful ingredients in spreads. Suitable biopolymer materials are for example gelatin, soy protein, xanthan gum, locust bean gum, hydrolysed starches (for example PaselliSA2 and N-oil), rice starch and microcrystalline cellulose. Some protein in gelled particles in the so-called "filled gel" compositions described below can be tolerated in the present compositions.

The amount of biopolymer in spreads of the invention is dependant on the desired degree of gelling and the presence of other ingredients in the composition. Usually the amount of gelling agent lies between 0 and 30%, mostly between 0.1 and 25% based on the weight of the aqueous phase of the spread. If hydrolyzed starches are present their level is preferably from 5-20%; other gelling agents are generally used at levels of up to 10%, mostly 1-7%, most preferred 2-5% all percentages being based on the weight of the aqueous phase. Particularly preferred are combination of say 5-15% hydrolysed starch and 0.5-5% of other gelling materials. Preferably the other gelling material includes gelatin.

Preferably the amount of gelatin present is limited to about 6% or less of the aqueous phase. Indeed, the total buffering capacity of the spread is preferably limited to that which is equivalent to that of 6% or less gelatin based on the aqueous phase.

The balance of the composition is generally water, which may be incorporated at levels of up to 99.9% by weight, more general from 10 to 98%, preferably from 20 to 97% by weight. Spreads according to the invention may be fat and/or water continuous.

The mesomorphic phase can be used as a partial or entire replacement for the water phase and/or oil phase in the spread products.

In the preparation of spreads in accordance with the invention, the mesomorphic phase may either prepared before the addition of other ingredients, or the mesomorphic phase may be prepared "in-situ" while other ingredients of the composition are present. In any case however, the formation of the mesomorphic phase, preferably involves the heating of the edible surfactants and water to a temperature above the Krafft temperature. Therefore, heat-sensitive ingredients or ingredients which could prevent the formation of mesomorphic phase, should preferably be added after the formation of the mesomorphic phase.

In general the method for preparing spreads according to the invention involves the mixing of the edible surfactants (preferably a mixture of a non-ionic surfactant and a co-surfactant) and water to a temperature just above the Krafft-temperature of the system. Other ingredients, e.g. salt, colouring agents and flavouring ingredients can also be added. The pH can be set to the desired value using e.g. sodium hydroxide or lactic acid. This mixture is then stirred gently until the components are distributed homogeneously. Subsequently the formed mesomorphic phase is cooled down, generally while applying shear. This results in a low calorie plastic spreadlike gel phase with oral properties similar to high- and reduced fat spreads. The fat ingredient of the spread, if any, is preferably added after cooling and mixed into the product under stirring to effect the desired structure formation. Sweet spreads may be prepared accordingly.

Where gel-forming ingredients in addition to the mesomorphic phase are to be used it may be advantageous to prepare the spread using a split stream process in which a "filled gel" is ultimately formed. In a filled gel split stream process, the mesomorphic phase is formed in one stream and a phase including gelled particles is formed in a second stream, after which the two streams are combined. The gelled particles maintain their individual gelled structures after combination with the mesomorphic phase so that the gelled particles in the second stream become embedded in and "fill" the gelled mesomorphic phase.

A filled gel may also be formed by adding gel particles to the surfactant and other ingredients prior to the formation of the mesomorphic phase if the gelled particles are formed from heat-stable gels. For instance, a slurry of gel particles made from heat stable gels such as agar or certain pectins could be added to the ingredients from which the mesomorphic phase is to be formed and the mixture heated and then cooled to form the mesomorphic phase. Provided that the temperature used does not exceed the maximum temperature at which the heat stable gelling agents form gels, the gelled particles retain their identity and a filled gel is obtained.

It has been found that filled gels are advantageously used to form spreads having a minimal amount of surfactant, e.g., less than about 3%, especially down to levels of around, e.g., 1.5%. Thus, where the surfactant is a fatty substance such as a monoglyceride, use of filled gels permit an even further decrease in the fat level. Preferably, the gelled particles are from 1-100 microns, especially from about 10 to about 50 microns.

### Other food products

Other food products in accordance with the invention which could advantageously contain a mesomorphic phase of edible surfactants, involve other edible emulsified systems, sauces, toppings, etc.

### EXAMPLES

The invention will be illustrated by means of the following examples:
All percentages in the examples are by weight of the composition unless indicated otherwise.

The following ingredients were used:
The surfactants named Hymono and Admul followed by a code all are trade names of Quest International. The various types of Beta-carotene were obtained from Hoffmann-La Roche Ltd, Basel, Switzerland. BMP is butter milk powder. SMP is skimmed milk powder. Salt is sodium chloride. DATEM is Admul Datem 1935.

### EXAMPLES IA - ID

### Example A; separate preparation of mesomorphic phase

A mesomorphic phase of edible surfactant was made of the following ingredients:

| | |
|---|---|
| distilled water | 93.7% |
| monoglycerides (*) | 6.0% |
| Lactylated fatty acid (**) | 0.3% |

| | |
|---|---|
| Notes: * Hymono 1103 (ex Quest Int.) | |
| ** Admul SSL 2004 (ex Quest Int) | |

The water was heated in a water-jacketed vessel until a temperature of 65°C. At that point all other ingredients were added to the water and the mixture was stirred gently, using a "ribbonvstirrer", for about 30 minutes. The pH of the product was set to a value of 4.6 using lactic acid. The product was cooled to ambient temperature.

The resulting product was a mesomorphic phase. The product could be used in the preparation of finished or ready to eat food products in accordance to the invention.

### Example B; separate preparation of mesomorphic phase

A mesomorphic phase was prepared with the following composition:

| | |
|---|---|
| Monoglyceride (*) | 7% |
| Sodium Stearoyl Lactylate (**) | 4% on mono. |
| Water | to 100% |
| Colour/Flavour | trace |

| | |
|---|---|
| Notes * = Hymono 1103 | |
| ** = Admul SSL 2004 | |

All ingredients were hand blended at 65°C and the blend was neutralised with sodium hydroxide solution to pH 7.0. The resulting mixture was cooled to 10°C. The resulting product was believed to be a mesomorphic phase.

### Example C; separate preparation of mesomorphic phase

A mesomorphic phase was prepared with the following composition:

| | |
|---|---|
| Tap water | 92.3% |
| Monoglycerides saturated(Hymono 8903) | 4% |
| unsaturated (Hymono 7804) | 3% |
| Co-surfactant (Admul DATEM 1935) | 0.7% |

The water was heated until 55°C on an electric heating plate equipped with a magnetic stirring facility. At 55°C the surfactants were added to the water and mixed using the magnetic stirrer, until distributed homogeneously (about 75 minutes). Then the mesomorphic phase was slowly cooled down to room temperature under continuous stirring.

In this way a plastic gel phase was obtained which did not show phase separation upon storage or spreading. The gel phase gave a distinct fatty oral impression.

### Example D; separate preparation of mesomorphic phase

A bulk mesomorphic phase was prepared with the following composition:

| | |
|---|---|
| Hymono 1103 | 5% |
| SSL (Admul SSL 2004) | 4% on mono |
| water | balance |
| colour/flavour | trace |

The amount of SSL is equivalent to 0.2% by weight of the product. All ingredients were mixed together in a stirred water jacketed vessel at 65°C, and neutralised with sodium hydroxide to pH 7.0.

### Example II

### Spreads Formulations

The formulations below are made as follows:

### Aqueous phase

Ingredients are added to water as powders at about 65.5°C and heated to 85.5°C followed by cooling back to 65.5°C. Lactic acid is added to adjust the pH to 4.8. The mix is fed into a Votator A-unit rotating at 150 rpm. Upon leaving the A-unit the temperature is 5°C. The mixture is then fed to a Votator C-unit which is rotating at 100-150 rpm. The mixture is then combined with the Mesomorphic phase.

### Mesomorphic phase

Powdered ingredients are added to 60.5°C water. The mixture is agitated. The mixture is mixed until the powders are fully dissolved and held for one hour before use at 55-58.5°C. The mixture is fed into an A-unit rotating at 780 rpm. The mixture leaves the A-unit at 5°C and enters a C-unit which is rotating at 1000 rpm. The mixture is combined with the aqeuous phase.

The combined phases are mixed in a static mixture and leave the mixer at a temperature of 10°C. The mixture is then packed or recycled, as necessary.

| Percentage of ingredients on product | | | |
|---|---|---|---|
| | FL1 | FL2 | FL3 (comparison) |
| | | | |

| Mesomorphic Phase | | | |
|---|---|---|---|
| sat'd dis Mono (Eastman) | 2.99 | - | - |
| sat'd dist Monogly(Quest) | | 2.99 | 2.99 |
| DATEM | 0.20 | 0.20 | 0.20 |
| water | 54.81 | 54.81 | 54.81 |
| CWS-beta carotene | 0.04 | 0.04 | 0.04 |
| FLAVORS | 0.26 | 0.304 | 0.334 |

| Aqueous Phase | | | |
|---|---|---|---|
| gelatin | 1.67 | 1.67 | 1.67 |
| remyrise AC, rice starch | 1.26 | 1.26 | 1.26 |
| lactose | 0.84 | 0.84 | -- |
| salt | 1.43 | 1.43 | 1.43 |
| K-sorbate | 0.11 | 0.11 | 0.11 |
| Lactic acid, 88% | 0.13 | 0.13 | 0.13 |
| water | balance | balance | balance |

Comparison Formulation FL3 contains no added lactose. Products FL1, FL2 and FL3 are taste tested in an expert panel of approximately 8 people. The products are all very spread-like but the lactose-containing formulations are found to contain noticeably less off-flavor.

### Example III (comparison)

Example II can be repeated by using butter milk instead of water in the mesomorphic phase. The buffering dairy ingredients in the butter milk result in a less preferred taste of the product.

### Example IV

Example II can be repeated by using fructose instead of lactose.

### Example V

Example II can be repeated by using aspartame at a sweetening level comparable to 0.84 wt% lactose.

## Claims

1. A finished foodstuff having bulk regions of a mesomorphic phase of edible surfactant, less than 80 wt% edible oil and a sweetening agent, wherein the sweetening agent comprises lactose and/or a non-sugar sweetening agent at a level providing a sweetness comparable to 0.1 to 5 wt% of lactose with the proviso that the composition contains less than 1%, preferably 0%, of dairy ingredients (other than lactose).

2. A finished foodstuff according to claim 1 in which the bulk regions of a mesomorphic phase of edible surfactant have a number average particle size of between 1 µm and 1,000 µm.

3. A finished foodstuff according to claim 1 comprising at least 5% by volume of mesomorphic phase.

4. A finished foodstuff according to claim 1 comprising from 0.1 to 30 wt% of edible surfactant.

5. A finished foodstuff according to claim 1 comprising lactose and/or non-sugar sweetener in a amount having a sweetness comparable to from 0.5% to 2% by weight of lactose

6. A finished foodstuff according to claim 1 comprising lactose and/or amount of non-sugar sweetener in an amount having a sweetness comparable thereto from 0.7% to 1.2% by weight of lactose.

7. A finished foodstuff according to claim 1 wherein the edible surfactant comprises a monoglyceride.

8. A finished foodstuff according to claim 1 in which the bulk regions of mesomorphic phase is a combination of a major amount of a non-ionic surfactant and a minor amount of an ionic co-surfactant.

9. A finished foodstuff according to claim 1 selected from the group of creams, toppings, sauces and spreads.

## Patentansprüche

1. Fertignahrungsmittel mit Massebereichen einer mesomorphen Phase eines eßbaren Tensids, weniger als 80 Gew.-% Speiseöl und einem Süßstoff, worin der Süßstoff Lactose und/oder einen Süßstoff, der nicht auf Zucker basiert, in einer Menge umfaßt, die eine mit 0,1 bis 5 Gew.-% Lactose vergleichbare Süße verleiht, unter der Bedingung, daß die Zusammensetzung weniger als 1 %, vorzugsweise 0 %, Inhaltsstoffe, die auf Molkereierzeugnissen basieren (außer Lactose), enthält.

2. Fertignahrungsmittel nach Anspruch 1, worin die Massebereiche einer mesomorphen Phase eines eßbaren Tensids eine zahlengemittelte Teilchengröße zwischen 1 µm und 1000 µm aufweisen.

3. Fertignahrungsmittel nach Anspruch 1, umfassend mindestens 5 Vol.-% mesomorphe Phase.

4. Fertignahrungsmittel nach Anspruch 1, umfassend 0,1 bis 30 Gew.-% eßbares Tensid.

5. Fertignahrungsmittel nach Anspruch 1, umfassend Lactose und/oder einen Süßstoff, der nicht auf Zucker basiert, in einer Menge, die eine Süße aufweist, die mit 0,5% bis 2 Gew.-% Lactose vergleichbar ist.

6. Fertignahrungsmittel nach Anspruch 1, umfassend Lactose und/oder eine Menge Süßstoff, der nicht auf Zucker basiert, in einer Menge, die eine Süße aufweist, die mit 0,7% bis 1,2 Gew.-% Lactose vergleichbar ist.

7. Fertignahrungsmittel nach Anspruch 1, worin das eßbare Tensid ein Monoglycerid umfaßt.

8. Fertignahrungsmittel nach Anspruch 1, in welchem die Massebereiche der mesomorphen Phase aus der Kombination einer Hauptmenge eines nichtionischen Tensids mit einer kleineren Menge eines ionischen Co-Tensids bestehen.

9. Fertignahrungsmittel nach Anspruch 1, ausgewählt aus der Gruppe von Sahnen, Glasuren, Soßen und Brotaufstrichen.

## Revendications

1. Produit alimentaire fini ayant des régions en masse d'une Phase mésomorphe de tensioactif comestible, moins de 80% en poids d'huile comestible et d'agent édulcorant, dans lequel l'agent édulcorant comprend le lactose et/ou un agent édulcorant qui n'est pas le sucre en une quantité assurant un sucrage comparable à 0,1 à 5% en poids de lactose à la condition que la composition contienne moins de 1%, de préférence 0% d'ingrédients laitiers (autres que le lactose).

2. Produit alimentaire fini selon la revendication 1, dans lequel les régions en masse d'une phase mésomorphe de tensioactif comestible ont une granulométrie moyenne en nombre entre 1 µm et 1000 µm.

3. Produit alimentaire fini selon la revendication 1, comprenant au moins 5% en volume de phase mésomorphe.

4. Produit alimentaire fini selon la revendication 1, comprenant de 0,1 à 30% en poids de tensioactif comestible.

5. Produit alimentaire fini selon la revendication 1, comprenant le lactose et/ou un édulcorant qui n'est pas le sucre en une quantité ayant un sucrage comparable à 0,5 à 2% en poids de lactose.

6. Produit alimentaire fini selon la revendication 1, comprenant le lactose et/ou une quantité d'édulcorant qui n'est pas le sucre ayant un sucrage comparable à 0,7 à 1,2% en poids de lactose.

7. Produit alimentaire fini selon la revendication 1, dans lequel le tensioactif comestible comprend un monoglycéride.

8. Produit alimentaire fini selon la revendication 1, dans lequel les régions en masse de la phase mésomorphe sont une combinaison d'une quantité principale d'un tensioactif non ionique et d'une petite quantité d'un co-tensioactif ionique.

9. Produit alimentaire fini selon la revendication 1, choisi parmi les crèmes, garnitures, sauces et produits à tartiner.
